Europäisches Patentamt

**European Patent Office**

**Office européen des brevets**

(11) Numéro de publication : **0 040 111**
**B1**

(19)

(12) FASCICULE DE BREVET EUROPÉEN

(45) Date de publication du fascicule du brevet :
26.09.84

(51) Int. Cl.³ : **B 60 K   9/00**, B 60 K   1/04,
B 62 D 59/04, B 62 D 47/02

(21) Numéro de dépôt : **81400545.0**

(22) Date de dépôt : **03.04.81**

(54) Véhicule automobile à deux modes de traction, notamment autobus.

(30) Priorité : **14.05.80 FR 8010824**

(43) Date de publication de la demande :
**18.11.81 Bulletin 81/46**

(45) Mention de la délivrance du brevet :
**26.09.84 Bulletin 84/39**

(84) Etats contractants désignés :
**BE DE GB IT LU NL**

(56) Documents cités :
**DE-A- 2 547 362**
**FR-A-   749 462**
**FR-A-   757 667**
**FR-A-   864 977**
**FR-A-   871 581**

(73) Titulaire : **S.A. HOLDING HENRI HEULIEZ**
**7, rue Louis Heuliez**
**F-79140 Cerizay (FR)**

(72) Inventeur : **Picard, Antoine**
**3, Place de la République**
**F-49300 Cholet (FR)**

(74) Mandataire : **Rodhain, Claude**
**Cabinet Claude RODHAIN 30, rue La Boétie**
**F-75008 Paris (FR)**

## Description

La présente invention concerne les véhicules automobiles à deux modes de traction, notamment les véhicules de transport, tels que les autobus de transport public, du type comprenant, d'une part, une cabine de transport ou véhicule principal montée sur roues et dans laquelle il est prévu un moteur thermique à combustion interne accouplé mécaniquement à un train de roues motrices de cette cabine et, d'autre part, une remorque qui est montée sur roues motrices et est attelée à l'arrière du véhicule par l'intermédiaire d'un attelage permettant la poussée du véhicule et qui contient une batterie d'accumulateurs et un moteur électrique relié à celle-ci et dont l'arbre de sortie est accouplé aux roues motrices de cette remorque, des moyens de couplage électrique étant prévus entre le véhicule principal et sa remorque.

Grâce à cet agencement, le véhicule peut se déplacer soit grâce à la seule traction de son moteur thermique lorsque l'on peut bénéficier des divers avantages de celui-ci (autonomie considérable, chauffage aisé de la cabine, charge utile élevée, puissance disponible très importante), sans en craindre les inconvénients (formation constante de fumées nauséabondes et toxiques et niveau sonore élevé permanent, nuisibles au confort et à la santé des piétons), ce qui est par exemple le cas en banlieue ou sur route, soit grâce à la seule propulsion électrique, lorsque les inconvénients du moteur thermique deviennent prononcés (par exemple dans un centre-ville, une zone d'habitation ou une zone de loisirs), ce qui présente en outre, divers avantages complémentaires (conduite très aisée, suppression de toute consommation de produits pétroliers).

On connaît déjà des véhicules connus de ce type, par exemple décrits dans le brevet FR-A-871 581.

L'invention a pour but de fournir un véhicule du type précité qui présente l'équipement convenable permettant le fonctionnement alterné voulu, en traction thermique, ou en poussée électrique, et ceci avec une commande aisée par le conducteur seul.

A cet effet, l'invention a pour objet un véhicule du type précité, caractérisé en ce que les moyens de couplage électrique comprennent un bloc de commande de sélection de fonctionnement thermique ou électrique monté sur le véhicule principal et relié, par des moyens de raccordement électrique entre l'arrière du véhicule principal et la remorque, au moteur électrique de celle-ci.

Ainsi, le véhicule proprement dit peut être constitué par un véhicule classique, de série, et celui-ci ne demande que de très légers aménagements d'attelage arrière pour lui permettre de recevoir la remorque. Un tel véhicule n'appartient donc pas à une flotte spécialisée, ce qui favorise les opérations d'achat, de revente et d'entretien. A cela s'ajoute le fait que tous les véhicules de même tonnage, et quelle que soit leur marque, peuvent recevoir un même modèle de remorque pousseuse, de sorte que, dans le cas d'un réseau de transport public, il suffit de disposer d'un nombre donné de remorques pour pouvoir équiper de la propulsion électrique tout type de véhicule. Ces mêmes véhicules peuvent, bien entendu, continuer de rouler en solo, c'est-à-dire sans remorque, lorsque l'exploitation l'exige.

Ces nombreux avantages sont complétés par un prix très compétitif de l'installation, une mise en œuvre extrêmement rapide et surtout par la conservation intégrale de la charge utile du véhicule proprement dit.

Il résulte de ce qui précède que l'invention trouve l'une de ses applications les plus avantageuses sur les véhicules de transport en commun tels que les autobus, mais elle peut également être utilisée, dans le cas du transport de marchandises, sur des camionnettes de livraison.

Par ailleurs, et c'est là également un avantage essentiel, pendant les deux modes de fonctionnement, le moteur électrique, qui est accouplé en permanence aux roues de la remorque, peut, grâce à une commande liée à la pédale de frein, fonctionner en génératrice et réaliser ainsi un ralentissement notable en récupérant une partie de l'énergie de freinage sous forme de recharge de la batterie.

Dans un mode de réalisation particulièrement avantageux, l'attelage de la remorque peut être un attelage articulé en rotation autour d'un axe vertical, ce qui facilite le déplacement de l'ensemble.

De préférence, la remorque peut contenir exclusivement l'ensemble de traction électrique et un dispositif de transport de matériel ou bagages, mais le plus avantageusement, cette remorque peut ne contenir exclusivement que l'ensemble de traction électrique, ce qui réduit au minimum son poids et son encombrement et donc facilite la manœuvre de l'ensemble, surtout dans une circulation très concentrée telle que celle d'un centre-ville.

De manière particulière, cette même remorque peut comporter un plancher monté sur les roues motrices et au-dessus duquel est disposée la batterie d'accumulateurs, tandis que le moteur électrique est fixé au-dessous de ce plancher.

De préférence, une troisième roue, pivotante et escamotable, peut être disposée à l'avant de la remorque, ce qui rend sa manipulation aisée lorsqu'elle est séparée du véhicule, cette remorque pouvant être ainsi déplacée par une seule personne.

D'autres caractéristiques et avantages de l'invention ressortiront de la description qui va suivre, à titre d'exemple non limitatif et en regard des dessins annexés sur lesquels :

la figure 1 représente une vue en perspective d'un véhicule suivant un mode de réalisation particulier conforme à l'invention,

la figure 2 représente une vue en perspective à plus grande échelle et sans carter, de la remorque de ce véhicule,

la figure 3 représente une vue de côté en coupe de cette même remorque,

la figure 4 représente schématiquement une vue de dessus illustrant le circuit de commande en fonctionnement thermique ou électrique,

la figure 5 représente un réseau d'exploitation sur lequel peut être utilisé ce véhicule.

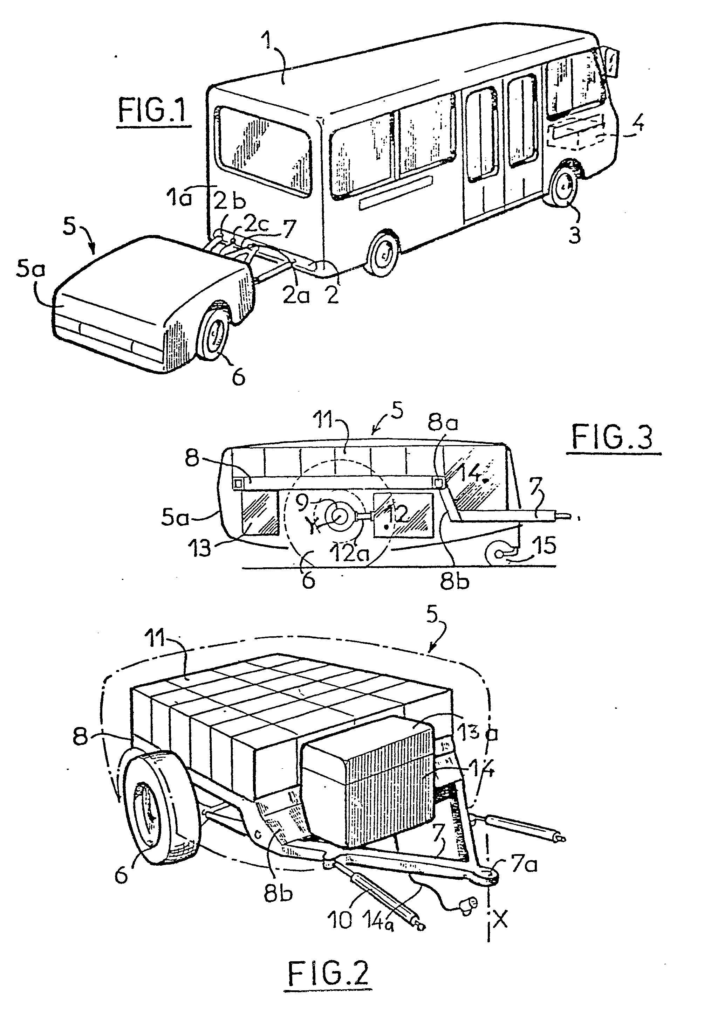

Le véhicule 1 représenté par la figure 1 est un autobus de transport public de petite capacité, dit « mini-bus », cet autobus étant un véhicule de série qui ne présente qu'une légère modification d'aménagement constituée par des organes 2 de fixation d'un attelage qui sont disposés sur la face arrière 1a de cet autobus. Cet autobus est normalement constitué d'une cabine de transport qui est montée sur des roues 3 et dans laquelle est logé un moteur à combustion interne 4 tel qu'un moteur diesel, celui-ci étant accouplé mécaniquement à un train de roues motrices de la cabine.

Comme le montre également la figure 1, ce même autobus 1 est muni d'une remorque 5 qui est montée sur des roues motrices 6 et qui est attelée à l'arrière du véhicule par l'intermédiaire d'un attelage 7.

Comme le montre plus précisément la figure 2 sur laquelle le carter 5a de la remorque est supposé enlevé, cette remorque comporte un plancher 8 qui, dans l'ensemble est horizontal, et dont la partie principale, qui comporte en particulier des traverses 8a (Figure 3), est fixée, par l'intermédiaire de moyens de suspension non représentés, sur un pont moteur 9 (Figure 3) qui relie les deux roues 6. A l'avant de cette partie principale, le plancher 8 présente une partie contrecoudée 8b qui est constituée par une face inclinée vers le bas, qui se prolonge elle-même par l'attelage 7. Cet attelage 7 présente une forme triangulaire classique dont le sommet 7a est constitué par un pivot qui permet l'articulation de l'attelage, autour d'un axe vertical X-X sur un premier élément de fixation 2a de la plaque arrière de fixation 2 de l'autobus. Il est également prévu, entre les éléments latéraux de l'attelage 7 et deux autres points de fixation 2b de la plaque 2, des stabilisateurs 10 assurant le maintien de la remorque contre tout mouvement de lacet anormal.

Comme le montrent également les figures 2 et 3, la partie principale 8 du plancher reçoit une batterie d'accumulateurs 11 constituée par exemple de vingt-quatre accumulateurs disposés sur une seule épaisseur et occupant toute la surface de cette partie de plancher.

Comme le montre la figure 3, un moteur électrique 12 est fixé sous la partie principale du plancher 8, entre sa partie avant inclinée 8b et le pont 9, l'arbre de sortie 12a de ce moteur étant disposé dans le plan horizontal de l'axe Y du pont de manière à être accouplé mécaniquement à ce même pont 9. Sous cette même partie principale 8 du plancher, se trouvent également fixés, à l'arrière du pont 9, un chargeur électrique 13 et un moto-générateur 120 V/12 V. Enfin, un bloc de régulation 14 se trouve enfermé dans un boîtier qui est posé et fixé à l'avant de la partie inclinée 8b du plancher, en saillie sur l'attelage 7, ce bloc étant accessible par un couvercle 13a du boîtier.

Le carter 5a est constitué par une coque qui enveloppe totalement l'ensemble du plancher et des éléments qui y sont fixés, à savoir la batterie, le moteur 12, le chargeur 13 et le bloc de régulation 14. La remorque comporte enfin une troisème roue de petit diamètre, pivotante et escamotable, 15 qui est disposée à l'avant de la remorque, sous l'attelage 7. Comme le montre encore la figure 2, un câble de raccordement 14a sort du bloc de régulation 14 en présentant à son extrémité une prise qui permet le raccordement sur un élément associé 2c de la plaque arrière de l'autobus.

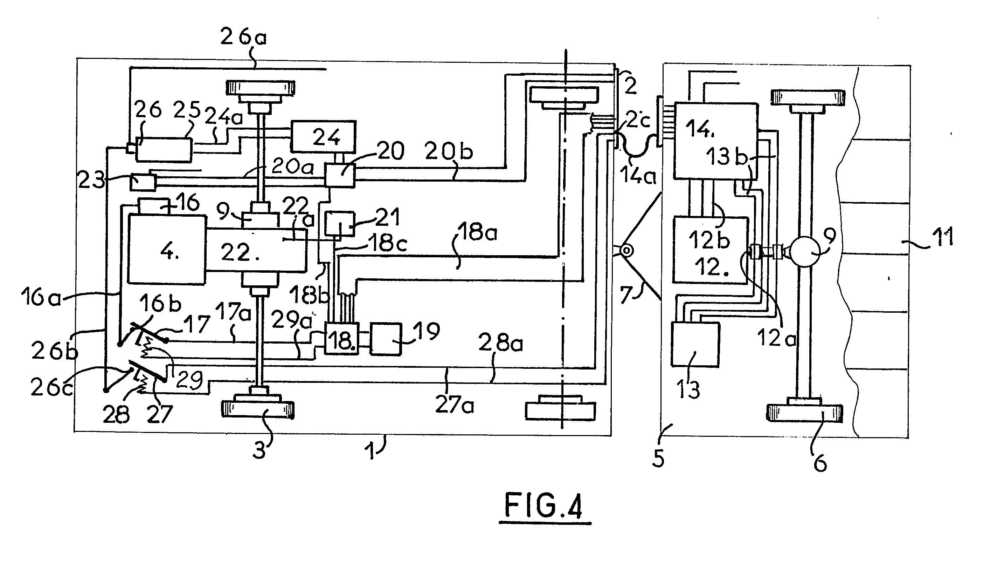

Comme le montre plus précisément la figure 4, le moteur électrique 12, qui peut être constitué par tout type de moteur classique à courant continu, est relié par un câble électrique 12b au bloc de régulation 14, tandis que le chargeur 13 est également relié à ce même bloc 14 par des câbles 13b.

Par ailleurs, comme le montre toujours la figure 4, le moteur thermique 4 du véhicule 1 proprement dit, comporte une pompe à injection 16 qui est reliée par un levier 16a à une tige 16b qui peut être reliée par l'intermédiaire de la pédale d'accélérateur 17 à un conducteur 17a qui aboutit à un bloc 18 de commande de sélection du mode de traction. Ce bloc 18 est relié à un organe inverseur 19 à deux positions qui peut être manœuvré par le conducteur, entre une position traction thermique et une position traction électrique. Ce même bloc de commande 18 est relié par un câble 18a à la prise 2c et par conséquent au bloc de régulation 14, par un conducteur 18b à un inverseur d'alimentation 12 V 20, et par un conducteur 18c à un dispositif 21 de verrouillage de point mort. Ce dispositif 21 est par exemple constitué par deux peignes orientés à 90° l'un par rapport à l'autre et coopérant avec le levier de vitesse 22a de la boîte de vitesse 22 associée au moteur thermique 4 pour entraîner les roues motrices 3, de manière à immobiliser ce levier en position de point mort lorsque ces organes sont actionnés par des solénoïdes du bloc de commande 18.

L'inverseur 20 est relié par un câble 20a d'alimentation 12 V à un alternateur 12 V 23 qui est associé au moteur 4, tandis que par ailleurs ce même inverseur est interposé sur un câble 12 V 20b qui relie la prise 2c à une batterie 12 V 24. Celle-ci est elle-même reliée par un câble 24a à un moteur 12 V 25 qui est accouplé à une pompe hydraulique de freinage 26, elle-même reliée au circuit 26a de freinage hydraulique du véhicule. Cette même pompe est reliée par un conducteur 26b à un contact 26c qui peut être relié par l'intermédiaire de la pédale de frein à un conducteur 27a à la prise 2c de liaison au bloc de régulation 14. Il est enfin prévu deux rhéostats 28 et 29 dont les curseurs sont solidaires respectivement de la pédale de frein 27 et de la pédale d'accélérateur 17, tandis qu'ils sont par ailleurs reliés par des câbles 28a et 29a respectivement à la prise 2c et au bloc de commande 18.

La double ligne constituée par les conducteurs 27a et 28a constitue une commande de ralentissement pour le moteur 12, assurant ainsi une sécurité de fonctionnement.

L'organe de verrouillage de point mort 21 présente le grand intérêt d'assurer l'interdiction du démarrage thermique tant que le conducteur n'a pas agi sur l'inverseur 19 pour actionner la commande de sélection du mode thermique par l'intermédiaire du bloc 18.

Grâce à cette possibilité d'inversion, il est donc possible d'obtenir soit une traction thermique, soit une traction électrique, chaque mode de traction présentant les avantages respectifs indiqués plus haut.

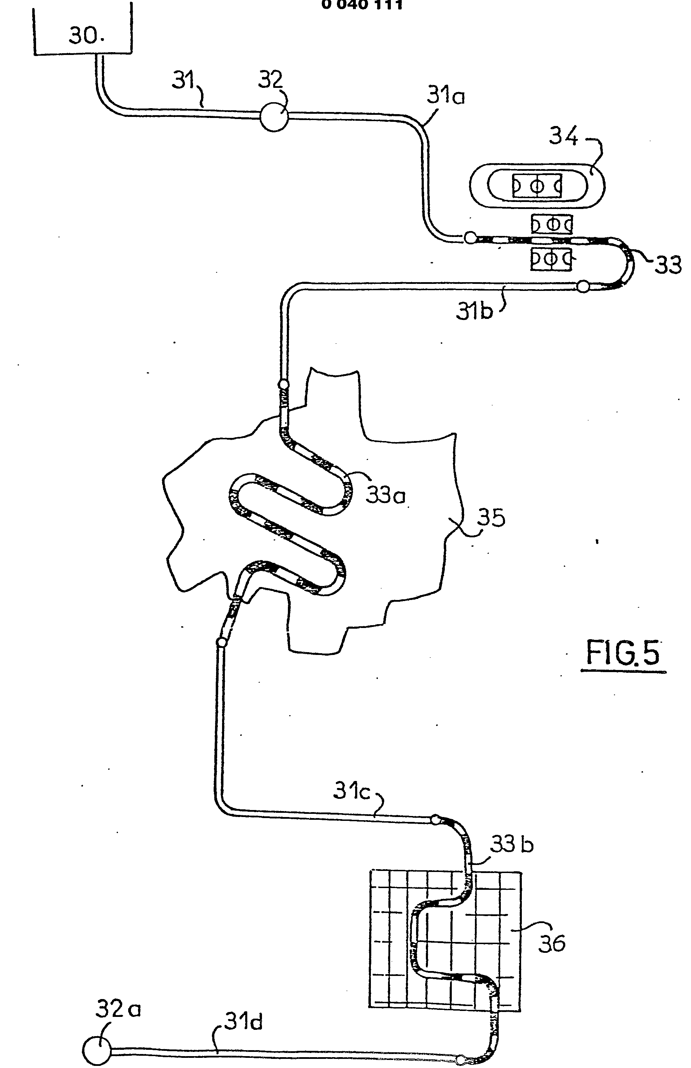

C'est ainsi en particulier que, comme le montre la figure 5, un véhicule par exemple constitué par un autobus de transport public, peut suivre un trajet successif entre un dépôt 30, une première section de route 31, un terminus 32, une seconde section de route 31a, une rue 33 située dans une zone de loisirs 34, un troisième tronçon de route 31b, une seconde rue ou succession de rues 33a située dans un centre-ville ou une zone piétonne 35, un quatrième tronçon de route 31c, une troisième rue 33b située dans une zone d'habitation 36, et enfin un cinquième tronçon de route 31d qui l'amène à un second terminus 32a. Sur un tel trajet, l'autobus peut utiliser le fonctionnement thermique sur les tronçons de route 31, 31a, 31b, 31c et 31d, tandis qu'il peut par contre adopter le mode de fonctionnement électrique dans les rues 33, 33a et 33b.

Il est tout aussi possible d'utiliser l'autobus seul (en fonction thermique), et ceci en séparant la remorque 5 de l'autobus proprement dit 1, en raison du montage amovible de l'attelage 7, des stabilisateurs 10 et du câble de commande électrique 14a, par rapport à la plaque arrière 2 de cet autobus.

A seul titre indicatif, il convient de préciser que, en fonctionnement thermique, l'ensemble de l'installation de la figure 4 fonctionne à la manière habituelle, à la seule exception du bloc de commande 18, de l'inverseur 19 et du dispositif de verrouillage 21 qui sont tous trois hors service, étant par ailleurs noté que la batterie 24 du véhicule est rechargée normalement à partir de l'alternateur 23 par l'intermédiaire de la ligne 20a et non pas par la ligne 20b.

Par contre, en fonctionnement électrique, les différents éléments précités sont en service, mais le moteur 4 n'étant pas mis en marche, la pompe 16 n'est pas actionnée par le levier 16a, tandis que par ailleurs, l'alternateur 23 étant également à l'arrêt, la batterie 24 est rechargée à partir du moto-générateur 13 par l'intermédiaire de la ligne 20b.

**Revendications**

1. Véhicule automobile à propulsion mixte thermique-électrique, notamment autobus de transport public, du type comprenant, d'une part, une cabine de transport (1) ou véhicule principal monté sur roues (3) et dans laquelle il est prévu un moteur thermique à combustion interne (4) accouplé mécaniquement à un train de roues motrices (3) de cette cabine et, d'autre part, une remorque (5) qui est montée sur roues motrices (6) et est attelée à l'arrière du véhicule par l'intermédiaire d'un attelage (7) permettant la poussée du véhicule et qui contient une batterie d'accumulateurs (11) et un moteur électrique (12) relié à celle-ci et dont l'arbre de sortie (12a) est accouplé aux roues motrices (6) de cette remorque, des moyens de couplage électrique étant prévus entre le véhicule principal (1) et sa remorque (5), caractérisé en ce que ces moyens de couplage comprennent un bloc de commande de sélection de fonctionnement thermique ou électrique (18), monté sur le véhicule principal et relié, par des moyens de raccordement (18a-2c-14a-14-12b) électrique entre l'arrière du véhicule principal et la remorque, au moteur électrique (12) de celle-ci.

2. Véhicule selon la revendication 1, caractérisé en ce que le bloc de commande de sélection de fonctionnement thermique ou électrique (18) est muni d'un organe inverseur à deux positions (19) de fonctionnement.

3. Véhicule selon l'une quelconque des revendications 1 et 2, caractérisé en ce que les moyens de raccordement électrique comprennent, sur le véhicule principal un câble électrique (18a) reliant le bloc de commande (18) à une prise (2c), entre le véhicule principal et la remorque, un câble de raccordement (14a) reliant la prise à un bloc de régulation (14) monté sur la remorque et un câble électrique (12b) reliant le bloc du régulateur au moteur électrique (12) de la remorque.

4. Véhicule selon l'une quelconque des revendications 1 à 3, caractérisé en ce qu'il comprend, en outre, un dispositif de verrouillage de point mort (21) relié au bloc de commande de sélection de fonctionnement thermique ou électrique (18) et coopérant avec la commande de changement de vitesse (22a) de la boîte de vitesse (22) associée au moteur thermique (4).

5. Véhicule selon la revendication 4, caractérisé en ce que le dispositif de verrouillage de point mort (21) comprend deux peignes orientés à 90° l'un par rapport à l'autre et coopérant avec le levier de vitesse (22a) de manière à l'immobiliser sous l'action de solénoïdes du bloc de commande (18).

6. Véhicule selon l'une quelconque des revendications 1 à 5, caractérisé en ce qu'un inverseur d'alimentation (20) se trouve interposé entre, d'une part, une batterie (24) de la cabine de transport (1) et, d'autre part, soit un alternateur (23), soit un chargeur ou moto-générateur (13) lui-même relié à un bloc de régulation (14) du moteur électrique (12) de la remorque (5).

7. Véhicule selon l'une quelconque des revendications 1 à 6, caractérisé en ce qu'il comprend, en outre un rhéostat (28) dont le curseur est solidaire de la pédale de frein (27) et qui est relié à un bloc de régulation (14) du moteur électrique (12) de la remorque (5).

8. Véhicule selon la revendication 7, caractérisé en ce qu'il comprend, en outre, un contact (26c) qui, d'une part, est relié à un groupe motopompe hydraulique de freinage (25-26), lui-même relié à la batterie (24) de la cabine (1) et au circuit hydraulique de freinage (26a) de cette cabine, et d'autre part, peut être relié, par l'intermédiaire de la pédale de frein (27) au bloc de régulation (14) du moteur électrique (12).

9. Véhicule selon l'une quelconque des revendications 1 à 8, caractérisé en ce qu'il comprend, en outre, un second rhéostat (29) dont le curseur est solidaire de la pédale d'accélérateur (17) et qui est relié au bloc de commande (18).

10. Véhicule selon la revendication 9, caractérisé en ce qu'il comprend, en outre, une tige (16b) qui, d'une part, est reliée à une pompe à injection (16) reliée au moteur thermique (4), et d'autre part, peut être reliée par l'intermédiaire de la pédale d'accélérateur (17) au bloc de commande (18).

11. Véhicule selon l'une quelconque des revendications 1 à 10, caractérisé en ce que la remorque comporte un plancher (8) monté sur les roues motrices (6) et au-dessus duquel est disposée la batterie d'accumulateurs (11), tandis que le moteur électrique (12) est fixé au-dessous de ce plancher (8), avec son arbre de sortie disposé dans le plan horizontal de l'axe (Y) des roues motrices (6) et de leur pont (9).

**Claims**

1. An automotive vehicle powered by a combination of heat and electricity, in particular a public transport omnibus comprising, on the one hand, a transport cabin (1) or main vehicle mounted on wheels (3) and in which there is provided an internal combustion thermal engine (4) mechanically coupled to a train of drive wheels (3) for driving the vehicle and, on the other hand, a trailer (5) which is mounted on drive wheels (6) and is connected to the rear of the vehicle by means of a connection device (7) enabling the vehicle to be pushed and which contains a set of storage batteries (11) and an electric motor (12) which is connected to the latter and whose output shaft (12a) is coupled to the drive wheels (6) of this trailer, electrical connection means being provided between the main vehicle (1) and its trailer (5), characterized in that these coupling means comprise a control unit (18) for selecting thermal or electric operation mounted on the main vehicle and connected, by electrical connection means (18a-2c-14a-14-12b) between the rear of the main vehicle and the trailer, to the electric motor (12) of the latter.

2. A vehicle as claimed in claim 1, characterized in that the control unit (18) for selecting thermal or electric operation is provided with an inverter member (19) having two operating positions.

3. A vehicle as claimed in either of claims 1 or 2, characterized in that the electrical connection means comprise, on the main vehicle, an electric cable (18a) connecting the control unit (18) to a socket (2c) between the main vehicle and the trailer, a connection cable (14a) connecting the socket to a regulating unit (14) mounted on the trailer and an electric cable (12b) connecting the regulating unit to the electric motor (12) of the trailer.

4. A vehicle as claimed in any one of claims 1 to 3, characterized in that it additionally comprises a dead centre locking device (21) which is connected to the control unit (18) for selecting thermal or electric operation and cooperates with a gear-changing control (22a) of a gear box (22) associated with the thermal motor (4).

5. A vehicle as claimed in claim 4, characterized in that the dead-centre locking device (21) comprises two combs orientated at 90° with respect to one another and cooperating with the gear-changing control (22a) so as to immobilize it under the action of solenoids of the control unit (18).

6. A vehicle as claimed in any one of claims 3 to 5, characterized in that a power-supply inverter (20) is disposed between a battery (24) of the transport cabin (1), on the one hand, and, on the other, either an alternator (23) or a charger or motor generator (13), itself connected to the regulating unit (14) of the electric motor (12) of the trailer (5).

7. A vehicle as claimed in any one of claims 3 to 6, characterized in that it further comprises a rheostat (28), whose slide is rigid with the brake pedal (27) and which is connected to the regulating unit (14) of the electric motor (12) of the trailer (5).

8. A vehicle as claimed in claim 7, characterized in that it further comprises a contact (26c) which, on the one hand is connected to a hydraulic braking motor-driven pump assembly (25-26), in turn connected to the battery (24) of the vehicle (1) and to the hydraulic braking circuit (26a) of the vehicle, and, on the other hand, may be connected by means of the brake pedal (27) to the regulating unit (14) of the electric motor (12).

9. A vehicle as claimed in any one of claims 7 or 8, characterized in that it further comprises a second rheostat (29), the slide of which is rigid with the accelerator pedal (17) and is connected to the control unit (18).

10. A vehicle as claimed in claim 9, characterized in that it further comprises a rod (16b) which, on the one hand, is connected to an injection pump (16) connected to the thermal motor (4), and, on the other, connected by means of the accelerator pedal (17) to the control unit (18).

11. A vehicle as claimed in any one of claims 1 to 10, characterized in that the trailer comprises a platform (8) which is mounted on the drive wheels (6) and above which the set of storage batteries (11) is arranged, whilst the electric motor (12) is fixed below this platform (8) with its output shaft arranged in the horizontal plane of the axis (Y) of the drive wheels (6) and of their axle (9).

**Ansprüche**

1. Kraftfahrzeug mit gemischt thermisch-elektrischem Antrieb, insbesondere Autobus für den öffentlichen Verkehr, mit einerseits einer Transportkabine (1) oder einem Hauptfahrzeug, das auf Rädern (3) montiert ist und in dem ein thermischer Motor (4) mit innerer Verbrennung vorgesehen ist, der mechanisch an einen Satz angetriebener Räder (3) dieser Transportkabine (1) angekuppelt ist und andererseits einem Anhänger (5), der angetriebene Räder (6) aufweist, der an die Rückseite des Fahrzeugs mittels einer ein Schieben des Hauptfahrzeugs ermöglichenden Kuppelvorrichtung angehängt ist und der einen Batteriesatz (11) und einen mit diesem verbundenen Elektromotor (12) aufweist, dessen Ausgangswelle an die angetriebenen Räder (6) des Anhängers (5) angekuppelt ist, wobei Mittel für eine elektrische Verbindung zwischen dem Hauptfahrzeug (1) und seinem Anhänger (5) vorgesehen sind, dadurch gekennzeichnet, daß diese Mittel für eine elektrische Verbindung eine Steuereinheit (18) für die Auswahl einer thermischen oder elektrischen Funktion aufweisen, die am Hauptfahrzeug (1) angeordnet ist und die über elektrische Verbindungsmittel (18a-2c-14a-14-12b) zwischen der Rückseite des Hauptfahrzeuges (1) und dem Anhänger (5) mit dem Elektromotor (12) dieses Anhängers (5) verbunden sind.

2. Kraftfahrzeug nach Anspruch 1, dadurch gekennzeichnet, daß die Steuereinheit (18) für die Auswahl einer thermischen oder elektrischen Funktion einen Inverter (19) mit zwei Funktionsstellungen hat.

3. Kraftfahrzeug nach Anspruch 1 oder 2, dadurch gekennzeichet, daß die elektrischen Verbindungsmittel aufweisen am Hauptfahrzeug (1) eine elektrische Leitung (18a), die die Steuereinheit (18) mit einer Steckdose (2c) verbindet, zwischen dem Hauptfahrzeug (1) und dem Anhänger (5) eine elektrische Leitung (14a), die die Steckdose (2c) mit einer Steuerstufe (14) verbindet, die auf dem Anhänger (5) montiert ist, und eine elektrische Leitung (12b), die die Steuerstufe (14) mit dem Elektromotor (12) des Anhängers (5) verbindet.

4. Kraftfahrzeug nach einem der Ansprüche 1 bis 3, dadurch gekennzeichnet, daß es weiterhin eine Verriegelungsvorrichtung mit Totpunkt (21) aufweist, die mit der Steuereinheit (18) für die Auswahl einer thermischen oder elektrischen Funktion verbunden ist und mit der Bedienung der Gangschaltung (22a) des dem thermischen Motors (4) zugeordneten Schaltgetriebes (22) zusammenwirkt.

5. Kraftfahrzeug nach Anspruch 4, dadurch gekennzeichnet, daß die Verriegelungsvorrichtung mit Totpunkt (21) zwei Kämme aufweist, von denen einer jeweils in Bezug auf den anderen im 90°-Winkel angeordnet ist und die mit dem Gangschalthebel (22a) dergestalt zusammenwirken, daß sie diesen unter der Wirkung von Solenoiden der Steuereinheit (18) immobilisieren.

6. Kraftfahrzeug nach einem der Ansprüche 1 bis 5, dadurch gekennzeichnet, daß ein Umschalter für die Stromzufuhr (20) zwischen einerseits einer Batterie (24) der Transportkabine (1) und andererseits entweder einer Wechselstromlichtmaschine (23) oder einem Ladegerät oder Motorgenerator (13) zwischengeschaltet ist, der wiederum mit der Steuerstufe (14) des Elektromotors (12) des Anhängers (5) verbunden ist.

7. Kraftfahrzeug nach einem der Ansprüche 1 bis 6, dadurch gekennzeichnet, daß es weiterhin einen Regelwiderstand (28), aufweist, dessen Gleitkontakt mit dem Bremspedal (27) verbunden ist und der mit der Steuerstufe (14) des Elektromotors (12) des Anhängers (5) verbunden ist.

8. Kraftfahrzeug nach Anspruch 7, dadurch gekennzeichnet, daß es weiterhin aufweist einen Kontakt (26c), der einerseits verbunden ist mit einer hydraulischen Motorpumpengruppe für die Bremsung (25-26), die ihrerseits mit der Batterie (24) der Transportkabine (1) und einem hydraulischen Bremskreis (26a) dieser Transportkabine (1) verbunden ist, und der andererseits mittels des Bremspedals (27) mit der Steuerstufe (14) des Elektromotors (12) verbunden werden kann.

9. Kraftfahrzeug nach einem der Ansprüche 1 bis 8, dadurch gekennzeichnet, daß es weiterhin einen zweiten Regelwiderstand (29) aufweist, dessen Gleitkontakt am Gaspedal (17) befestigt ist und der mit der Steuereinheit (18) verbunden ist.

10. Kraftfahrzeug nach Anspruch 9, dadurch gekennzeichnet, daß es weiterhin einen Stift (16b) aufweist, der einerseits mit einer Einspritzpumpe (16) verbunden ist, die dem thermischen Motor (4) zugeordnet ist und der andererseits mittels des Gaspedals (17) mit der Steuereinheit (18) verbunden werden kann.

11. Kraftfahrzeug nach einem der Ansprüche 1 bis 10, dadurch gekennzeichnet, daß der Anhänger (5) einen Boden (8) aufweist, der auf den angetriebenen Rädern (6) montiert ist und an dessen Oberseite sich der Batteriesatz (11) befindet, während der Elektromotor (12) unterhalb dieses Bodens (8) befestigt ist, wobei sich seine Ausgangswelle in der Horizontalebene der Achse (Y) der angetriebenen Räder (6) und ihrer Verbindungsachse (9) befindet.

FIG.1

FIG.3

FIG.2

FIG.4

0 040 111

FIG.5